# EUROPEAN PATENT SPECIFICATION

(11) **EP 0 402 557 B1**
(45) Date of publication and mention of the grant of the patent: **06.04.1994**
(21) Application number: 89830263.3
(22) Date of filing: 14.06.1989
(51) Int. Cl.: F16K 31/60

(54) **Improved handwheel for operating valves, gate valves and the like**
Handrad zum Betätigen von Ventilen, Schiebern und dergleichen
Volant pour l'actionnement de soupapes, vannes d'arrêt et autres choses semblables

(43) Date of publication of application: 19.12.1990
(73) Proprietor: Marini, Cipriano, I-21020 Crugnola di Mornago (Varese) (IT)
(72) Inventor: Marini, Cipriano, I-21020 Crugnola di Mornago (Varese) (IT)
(74) Representative: Cicogna, Franco

(56) References cited:
- DE-B- 6 783
- US-A- 1 080 080
- US-A- 1 218 753
- US-A- 1 548 520

## Description

The present invention relates to an improved structure handwheel,specifically designed for operating valves,gate valves and the like.

As is known, large size manually controlled valves are usually provided with an operating handle, which is coupled to the stem of said valves in order to transmit to the stem a driving torque.

Also known is the fact that Presently available operating hanwheels are rather complex construction-wise and difficult to be engaged by an operator hand.

The document US-A-1 080 080 discloses a handwheel for operating valves having the features of the preamble of claim 1.

Accordingly,the present invention sets out to overcome the above mentioned drawbacks,by providing an improved hanwheel,for operating the stem of valves in general which is very simple construction wise and can be made by simple forming or pressing methods.

Within the scope of the above mentioned aim,a main object of the present invention is to provide such an improved handwheel for operating valves which can be easily grasped by the operator.

Another object of the present invention is to provide such a handwheel which is adapted to facilitate the tangential handling thereof by an operator.

Yet another object of the present invention is to provide such a handwheel which is very reliable in operation and can be constructed starting from easily available materials and elements.

According to one aspect of the present invention, the above mentioned aim and objects,as well as yet other objects,which will become more apparent hereinafter,are achieved by a handwheel for operating valves,gate valves and the like, having the features of the characterizing part of claim 1.

Further characteristics and advantages of the handwheel for valves,gate valves and the like according to the present invention will become more apparent from the following detailed description of some preferred embodiments thereof,with reference to the accompanying indicative but not limitative drawings,where:
figure 1 is a top plan view of the handwheel according to the present invention;
figure 2 is a cross-sectional view of the handwheel;

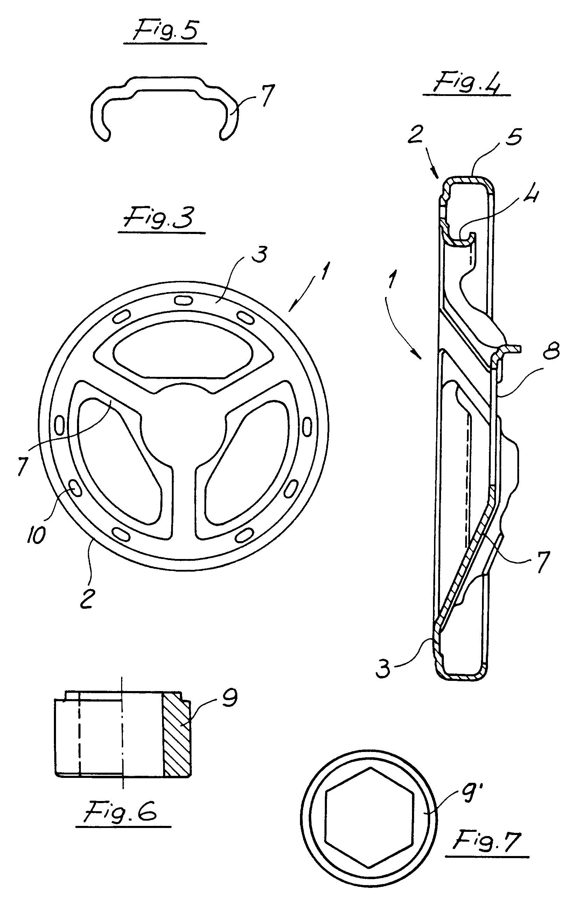

figures 3 and 4 are respectively a top plan view and a cross-sectional view of a modified embodiment of the handwheel;
figure 5 schematically show the profile of spoke members included in the subject handwheel; and
figures 6 and 7 respectively show an elevation view and a top plan view of the hub member included in the subject handwheel.

With reference to the figures of the accompanying drawings,the improved structure handwheel for operating valves,gate valves and the like according to the present invention,which has been indicated at the overall reference number 1,comprises a circular ring member 2,consisting of an open profile or section member provided with a top continuous ridge 3,and the side inner 4 and outer 5 walls of which are provided with an inward bent or turned edge.

Thus,owing to this provision,an operator can easily grasp the circular ring member with a great safety without any danger of injuring his hands.

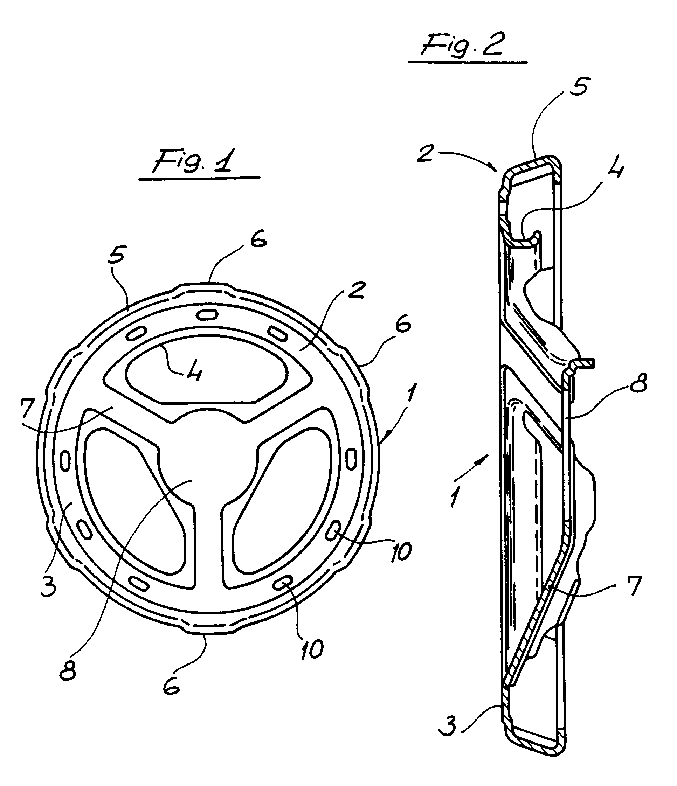

In this connection it should be pointed out that the outer wall of the circular ring member can diverge downward,if desired with projecting spaced portions 6,as shown in figures 1 and 2,or with a substantially vertical arrangement.

As is shown,from the mentioned circular ring member there inward radially extend at least three spoke members 7 which are downward slanted and converge into a central disk member 8.

On said central disk member 8 there is applied, preferably by welding,a bush or prepressed hub member 9 which can be firmly coupled to the stem of the valve to be actuated.

In this connection it should be moreover pointed out that said spoke members 7 also have an inward bent edge,so that they can be safely engaged by the operator hands.

The top and side walls of the ring member 2, moreover,can be provided with a plurality of slotted openings 10 evenly spaced from one another.

From the above disclosure it should be apparent that the handwheel according to the present invention fully achieves the intended aim and objects.

While the invention has been disclosed and illustrated with reference to preferred embodiments thereof,it should be apparent that the disclosed embodiments are susceptible to several modifications and variations which will come within the scope of the accompanying claims.

## Claims

1. A handwheel (1) for operating valves, gate valves and the like wherein said handwheel comprises a circular ring member (2) consisting of a double downward bent concave profile, having a substantially inverted U-shaped cross section, which is coupled to a central disk member (8) by three or more spoke members (7) also consisting of a double bent concave profile, said circular ring and spoke members (2, 7) being made by a single pressing operation, said circular ring member consisting of an open profile or section member provided with a continuous top ridge (3), characterized in that said spoke members (7) are downward slanted and have inward bent side edges projecting into the interior of said concave profile and in that the inner walls (4) of said circular ring member (2) have an inward turned edge likewise projecting into the interior of said concave profile.

2. A handwheel according to claim 1, characterized in that the outer side wall of said circular ring member (2) downward diverges and is provided with projecting spaced portions (6).

3. A handwheel according to Claims 1 and 2, characterized in that said outer side wall of said circular ring member (2) has a substantially vertical arrangement.

4. A handwheel according to one or more of the preceding claims, characterized in that from said circular ring member (2) there radially inward extend three downward slanted spoke members (7) converging to said central disk member (8) thereon there is welded a prepressed hub member (9) adapted to firmly engage a stem of a valve to be actuated.

5. A handwheel according to one or more of the preceding claims, characterized in that said top and side walls of said circular ring member (2) are provided with a plurality of evenly spaced slotted openings (10).

## Patentansprüche

1. Ein Handrad (1) zum Betätigen von Ventilen, Absperrschiebern und dergleichen, wobei dieses Handrad ein kreisförmiges Ringelement (2) besitzt, umfassend ein doppelt abwärts gefaltetes konkaves Profil, mit einen im wesentlichen invertierten U-förmigen Querschnitt, das mit einem zentralen scheibenförmigen Element (8) durch drei oder mehr Speichen (7), ebenso bestehend aus einem doppelt gefaltetem konkavem Profil, verbunden ist, dieser kreisförmige Ring und die Speichen (2, 7) sind durch einen einseitigen Preßvorgang geschaffen; dieses kreisförmige Ringelement besteht aus einem offenem Profil oder Profilteil mit einer durchgehenden oberen Furche (3), dadurch gekennzeichnet daß diese Speichen (7) nach unten geneigt sind und nach innen gebogene Seitenkanten besitzen, die sich in die Innenseite dieses konkaven Profils hinein erstrecken, und daß die Innenwände (4) dieses kreisförmigen Ringelementes (2) eine nach innen gerichtete Kante besitzen, gleichermaßen sich in die Innenseite dieses konkaven Profils hinein erstreckend.

2. Ein Handrad gemäß Anspruch 1, dadurch gekennzeichnet, daß die äußere Seitenwand dieses kreisförmigen Ringteils (2) nach unten divergiert und abstehende, mit Abständen verteilte Teile (6) umfaßt.

3. Ein Handrad gemäß Ansprüche 1 und 2, dadurch gekennzeichnet daß diese äußere Seitenwand dies kreisförmigen Ringteils (2) eine im wesentlichen vertikale Anordnung besitzt.

4. Ein Handrad gemäß einem oder mehrerer der vorhergehenden Ansprüche, dadurch gekennzeichnet, daß von diesem kreisförmigen Ringteil (2) sich drei nach unten geneigte Speichen (7) radial nach innen erstrecken, die an dieser zentralen Scheibe (8) konvergieren, auf der ein vorgepreßtes Nabenteil (9) angeschweißt ist, angepaßt, fest den Schaft eines zu betätigenden Ventils aufzunehmen.

5. Ein Handrad gemäß einem oder mehrerer der vorhergehenden Ansprüche, dadurch gekennzeichnet, daß diese Ober- und Seitenwände dieses kreisförmigen Ringteils (2) mit einer Vielzahl von gleichmäßig angeordneten Schlitzen (10) bereitgestellt sind.

## Revendications

1. Volant (1) pour l'actionnement de soupapes, vannes d'arrêt et similaires, où ledit volant comprend un élément annulaire circulaire (2) consistant en un profilé concave doublement plié vers le bas ayant une coupe transversale en forme de *U* substantiellement invertie, qui est accouplé à un disque central (8) à l'aide de trois ou plus rayons (7), de même consistant en un profilé concave doublement plié, lesdits anneau circulaire et rayons (2, 7) étant formés par une opération de pressage unilatérale, ledit anneau circulaire consistant en un profilé ou élément profilé ouvert pourvu d'une nervure continue supérieure (3), caractérisé en ce que lesdits rayons (7) sont inclinés vers le bas et possèdent des bords pliés vers l'intérieur se projetant vers l'intérieur dudit profilé concave, et en ce que les parois intérieures (4) dudit élément annulaire circulaire (2) ont un bord montrant vers l'intérieur, de même se projetant vers l'intérieur dudit profilé concave.

2. Volant selon la Revendication 1, caractérisé en ce que la parois latérale extérieure dudit élément annulaire circulaire (2) diverge vers le bas et est pourvue de parties projetantes écartées (6).

3. Volant selon les Revendications 1 et 2, caractérisé en ce que ladite parois latérale extérieure dudit élément annulaire circulaire (2) est substantiellement arrangée verticalement.

4. Volant selon l'une ou plusieures des Revendications précédentes, caractérisé en ce que dudit élément annulare circulaire (2) s'étendent radialement vers l'intérieur trois rayons (7) inclinés vers le bas qui convergent audit disque central (8) sur lequel un moyeu prépressé (9) est soudé, adapté à l'enclenchement rigide avec la tige de la soupape qui doit être actionnée.

5. Volant selon l'une ou plusieures des Revendications précédentes, caractérisé en ce que lesdites parois supérieures et latérales dudit élément annulaire circulaire (2) sont pourvues d'une multiplicité de fentes (10) uniformément écartées.
